# EUROPEAN PATENT APPLICATION

(11) **EP 4 622 019 A1**
(43) Date of publication of application: **24.09.2025**
(21) Application number: 23891984.9
(22) Date of filing: 14.11.2023
(51) Int. Cl.: H01R 13/6584, H01R 13/24

(54) **RF CONNECTOR AND COMMUNICATION DEVICE COMPRISING SAME**

(30) Priority: 18.11.2022 KR 20220155854
(71) Applicant: KMW Inc., Hwaseong-si, Gyeonggi-do 18462 (KR)
(72) Inventor: JEONG, Bae Mook, Suwon-si Gyeonggi-do 16548 (KR); AHN, Seong Min, Hwaseong-si Gyeonggi-do 18462 (KR); PARK, Ki Hun, Hwaseong-si Gyeonggi-do 18464 (KR); RYU, Chi Back, Hwaseong-si Gyeonggi-do 18392 (KR); KIM, Jae Eun, Suwon-si Gyeonggi-do 16330 (KR); LEE, Seung Min, Suwon-si Gyeonggi-do 16461 (KR); JI, Kyo Sung, Hwaseong-si Gyeonggi-do 18484 (KR)
(74) Representative: Impuls legal PartG mbB
(86) International application number: PCT/KR2023/018292
(87) International publication number: WO 2024/106917

(57) **Abstract**

Disclosed are an RF connector and a communication device comprising same. According to an embodiment of the present disclosure, a communication device is provided, the communication device comprising: an instrument box comprising a substrate mounting surface and a connection groove that is formed on the substrate mounting surface; a plurality of printed circuit boards arranged on the substrate mounting surface; a connector that is arranged in the connection groove and electrically connects the plurality of printed circuit boards; and a gasket arranged to cover at least part of the connector.

## Description

### Technical Field

The present invention relates to an RF connector and a communication device including the same.

### Background Art

The description described in this part merely provides background information for the present disclosure, but does not constitute the related art.

In order to transmit and receive an radio frequency (RF) signal between printed circuit boards (PCBs), an RF connector is generally used. RF connectors include a single connector that carries a single frequency signal and a multi-connector that carries multiple signals in different frequency bands. In particular, in recent years, multi-connectors have been widely used to process signals in various frequency bands.

However, a connector for transmitting a frequency signal occupies a large volume, and in order to connect various printed circuit boards due to the structure and function of the connector, there is a problem in that a height difference between the printed circuit boards occurs, and the size of the device as a whole increases.

In addition, there is a limit to the range of frequency bands that may be processed by the connector, and there is a problem in that the unit cost of the component increases as a whole in order for the connector to transmit signals in many or a wide range of frequency bands.

### Contents of the Invention

### Problem to be Solved

An RF connector and a communication device including the same according to the present disclosure may be configured to carry RF signals on the same plane or at similar heights to reduce the overall size of the device.

The RF connector and the communication device including the same according to the present disclosure may process signals in various frequency bands, and at the same time, may improve economic efficiency by lowering a unit price of a component.

The RF connector and the communication device including the same according to the present disclosure may be configured to have a compact size while having excellent radiating fin performance.

The RF connector and the communication device including the same according to the present disclosure may significantly improve the shielding effect by including a gasket disposed to cover the RF connector.

### Method for Solving Problem

According to an embodiment of the present disclosure, there is provided a communication device, including: an instrument box including a substrate mounting surface and a connection groove formed in the substrate mounting surface; a plurality of printed circuit boards disposed on the substrate mounting surface; a connector disposed in the connection groove and electrically connecting the plurality of printed circuit boards; and a gasket disposed to cover at least a part of the connector.

According to another embodiment of the present disclosure, there is provided an RF connector, including: an elastic connecting member, at least a part of which is elastically deformable, configured to electrically connect the printed circuit boards; a support member for supporting the elastic connecting member; and a gasket disposed to cover at least a part of the elastic connecting member.

### Effects of the Invention

According to the present disclosure, an RF connector and a communication device including the same are configured to transmit RF signals on the same plane or at a similar height, which has the effect of reducing the size of the entire device.

According to the present disclosure, the RF connector and the communication device including the same have an effect of processing signals in various frequency bands, and improving economic efficiency by lowering a unit cost of a component.

According to the present disclosure, the RF connector and the communication device including the same have an effect of being configured to have a compact size while having excellent radiating fin performance.

According to the present disclosure, the RF connector and the communication device including the same include a gasket disposed so as to cover the RF connector, which has the effect of significantly improving the shielding effect.

### Brief Description of the Drawings

FIG. 1 is an exploded perspective view of some configurations of a communication device according to an embodiment of the present disclosure.
FIG. 2A is a cross-sectional view of a portion of a communication device according to an embodiment of the present disclosure, showing when printed circuit boards are not disposed.
FIG. 2B is a cross-sectional view of a portion of a communication device according to an embodiment of the present disclosure, showing when printed circuit boards are disposed.
FIG. 3 is a perspective view of a portion of a communication device according to an embodiment of the present disclosure.
FIG. 4 is a perspective view separately illustrating only a connector of a communication device according to an embodiment of the present disclosure.
FIG. 5 is a diagram illustrating examples of a connector that is integrally formed via an insert injection method according to an embodiment of the present disclosure.
FIG. 6A is a cross-sectional view of a portion of a communication device according to another embodiment of the present disclosure, showing when printed circuit boards on which a printed board connected with a connector has the same height are not disposed.
FIG. 6B is a cross-sectional view of a portion of a communication device according to another embodiment of the present disclosure, showing when printed circuit boards on which a printed board connected with a connector has the same height are disposed.
FIG. 7 is a perspective view of a portion of a communication device according to another embodiment of the present disclosure.
FIG. 8 is a perspective view separately illustrating only a connector of a communication device according to another embodiment of the present disclosure.
FIG. 9 is a perspective view of a portion of a device configured for simulating connector performance of a communication device according to the present disclosure.
FIG. 10 is a perspective cross-sectional view of FIG. 9.
FIG. 11 is a simulation result for the device configuration of FIGS. 9 and 10.
FIG. 12A is a cross-sectional view of a portion of a communication device according to another embodiment of the present disclosure, showing when printed circuit boards are not disposed.
FIG. 12B is a cross-sectional view of a portion of a communication device according to another embodiment of the present disclosure, showing when printed circuit boards are disposed.
FIG. 13 is a perspective view of a portion of a communication device according to another embodiment of the present disclosure.
FIG. 14 is an exploded perspective view of a connector according to another embodiment of the present disclosure.
FIG. 15 is a cross-sectional view of a gasket according to another embodiment of the present disclosure.
FIG. 16 is a simulation result for another embodiment of the present disclosure.
FIG. 17 is an exploded perspective view of a connector including a gasket without an insertion groove according to another embodiment of the present disclosure.
FIG. 18 is an exploded perspective view of a connector including a gasket with an insertion groove according to another embodiment of the present disclosure.
FIG. 19 is a simulation result for the connector shown in FIGS. 17 and 18.

### Detailed Description of Exemplary Embodiments

Hereinafter, some embodiments of the present disclosure will be described in detail with reference to exemplary drawings. Note that when components in each drawing are denoted by reference numerals, the same components are denoted by the same numerals as much as possible even if they are denoted on different drawings. In addition, in describing the present disclosure, if it is determined that a specific description of a related known configuration or function may obscure the subject matter of the present disclosure, the detailed description thereof will be omitted.

In describing the components of the present invention, the terms "first," "second," "A," "B," "(a)," "(b)," and the like may be used. These terms are only used to distinguish the components from other components, and the nature, sequence, order, or the like of the components is not limited by these terms.

Where an element is described as being "connected," "coupled" or "accessed" to another element, it will be understood that the element may be directly connected or connected to the other element, but that another element may also be "connected," "coupled" or "accessed" between each element.

Throughout the specification, when a part "includes" or "has" an element, unless otherwise specified, the part may further include other elements instead of excluding the other elements.

The terms "... unit," "module" and the like described in the specification mean a unit that processes at least one function or operation, and may be implemented by hardware or software, or a combination of hardware and software.

Unless otherwise specified, it should be understood that the description of one embodiment may be applied to other embodiments.

The description set forth below in connection with the appended drawings is intended to describe exemplary embodiments of the invention and is not intended to represent the only embodiments in which the invention may be practiced.

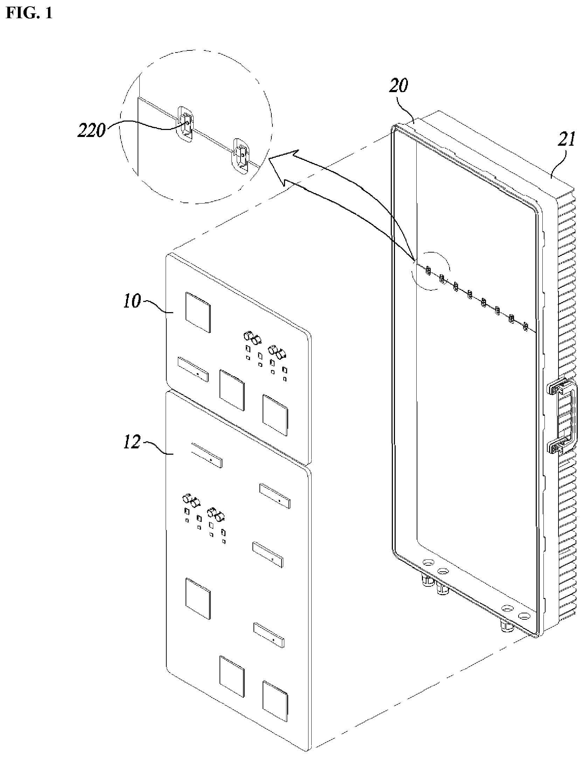

FIG. 1 is an exploded perspective view of some configurations of a communication device according to an embodiment of the present disclosure.

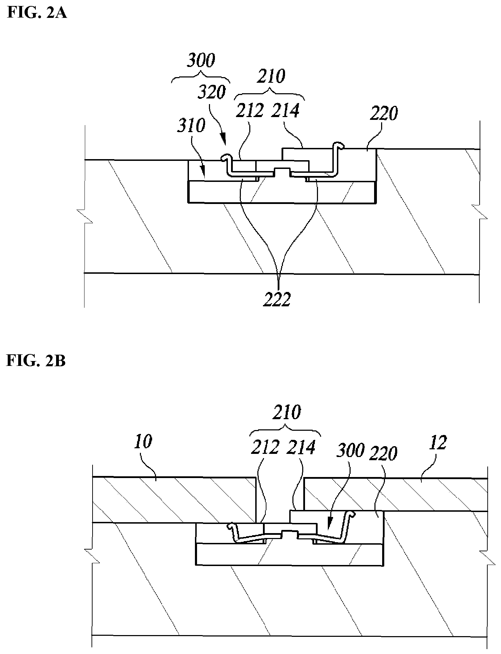

FIG. 2A is a cross-sectional view of a portion of a communication device according to an embodiment of the present disclosure, showing when printed circuit boards are not disposed.

FIG. 2B is a cross-sectional view of a portion of a communication device according to an embodiment of the present disclosure, showing when printed circuit boards are disposed.

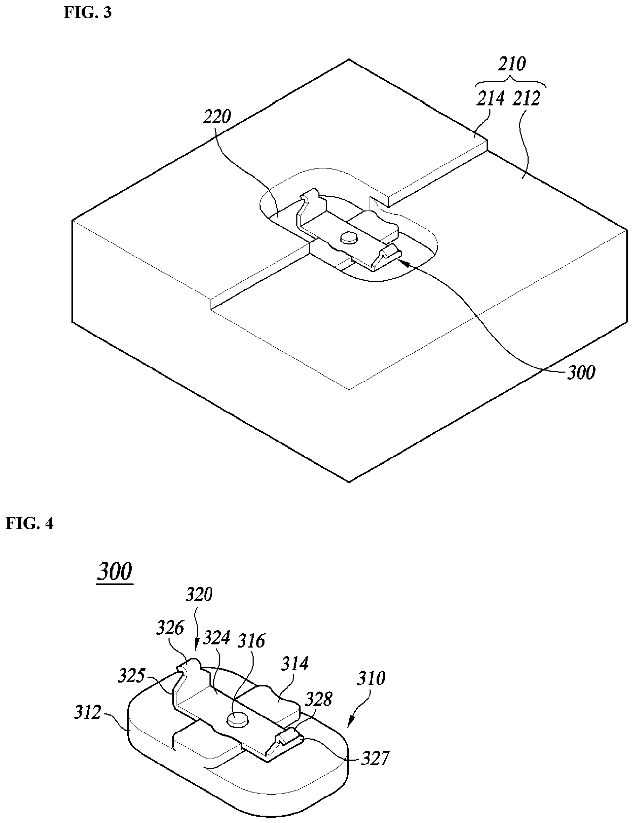

FIG. 3 is a perspective view of a portion of a communication device according to an embodiment of the present disclosure.

Referring to FIG. 1 to FIG. 3, a communication device according to an embodiment of the present disclosure includes all or a part of an instrument box 20, a first printed circuit board 10, a second printed circuit board 12, and one or more connectors 300.

The instrument box 20 includes a substrate mounting surface 210 on which the first printed circuit board 10 and the second printed circuit board 12 are mounted, and one or more connection grooves 220 formed in the substrate mounting surface 210. The instrument box 20 may be formed of a thermally conductive rigid member, for example, an aluminum alloy or a stainless steel alloy.

In one embodiment of the invention, the instrument box 20 is configured to form the exterior of the communication device and support the device structure, and is illustrated as being an outer housing configured to receive printed circuit boards. The outer housing includes a plurality of radiating fins 21 formed on at least some surfaces thereof.

However, the present invention is not limited thereto, and the instrument box 20 may be a separate component other than the outer housing, for example, may be a separate thermally conductive rigid member that supports the printed circuit boards between the outer housing and the printed circuit board.

The substrate mounting surface 210 may include a first mounting surface 212 on which the first printed circuit board 10 is mounted and a second mounting surface 214 on which the second printed circuit board 12 is mounted. The first mounting surface 212 and the second mounting surface 214 may be formed to have a step with respect to each other.

In one embodiment of the present invention, the first printed circuit board 10 and the second printed circuit board 12 may have different thicknesses. The size of the step between the first mounting surface 212 and the second mounting surface 214 may correspond to a difference in thickness between the first printed circuit board 10 and the second printed circuit board 12. As a result, the upper surface of the first printed circuit board 10 (the surface opposite to the surface supported by the substrate mounting surface 210) and the upper surface of second printed circuit board 12 (the surface opposite the surface supported by substrate mounting surface 210) may be disposed on the same plane or on a plane equivalent thereto.

Although not shown here, the coplanar arrangement of the first printed circuit board 10 and the second printed circuit board 12 may serve as an advantage in reducing or optimizing the overall size and weight of the communication device, in arranging any connectors 300 that directly connect the two, or filters or other elements that support the two or are installed on the top surface.

The one or more connection grooves 220 are formed in the substrate mounting surface 210, and for example, a plurality of connection grooves 220 may be formed along a boundary between the first mounting surface 212 and the second mounting surface 214.

The first printed circuit board 10 may include a plurality of devices mounted thereon. In the RF connector according to an embodiment of the present disclosure, the first printed circuit board 10 may be an amplifier (Amp) board, but is not limited thereto.

The second printed circuit board 12 may include a plurality of devices disposed adjacent to and spaced apart from the first printed circuit board 10 on one side of the first printed circuit substrate 10 and mounted thereon. In the RF connector according to an embodiment of the present disclosure, the second printed circuit board 12 may be, but is not limited to, a digital board.

The one or more connectors 300 are disposed in the connection groove 220 and configured to electrically connect the first printed circuit board 10 and the second printed circuit board 12.

FIG. 4 is a perspective view separately illustrating only a connector of a communication device according to an embodiment of the present disclosure.

Referring to FIG. 4, the connector 300 may include a support member 310 and an elastic connecting member 320.

The support member 310 may contact at least a part of the instrument box 20 in the connection groove 220. The support member 310 is an insulating material, and may be made of a high heat-resistant thermoplastic, for example, polycarbonate, Lusep, or Teflon.

The elastic connecting member 320 may be made of an electrically conductive material, and may be made of a material having elasticity and suitable for transmitting a high frequency signal (RF signal), for example, beryllium copper (BeCu) or stainless steel alloy (SUS). The elastic connecting member 320 is disposed between the support member 310 and the first printed circuit board 10 and/or the second printed circuit board 12, and is configured to electrically connect the first printed circuit substrate 10 and the second printed circuit substrate 12.

In addition, the elastic connecting member 320 may include a plate-shaped base 324, a first side wall 325 formed at one end of the plate-shaped base 224, a first contact portion 326 formed at the one end of the first side wall 326, a second side wall 327 formed at the other end of the plate-shaped base 324 and a second contact portion 328 formed at the one ends of the second side wall 326. The elastic connecting member 320 may be formed by bending processing.

As described above, the substrate mounting surface 210 may have a step corresponding to a difference in thickness between the first printed circuit board 10 and the second printed circuit board 12. In addition, lengths (or vertical heights) of the first side wall 325 and the second side wall 327 of the elastic connecting member 320 may be different to correspond to a size of a step of the substrate mounting surface 210.

The support member 310 may include a support base 312, a protruding mount portion314 protruding from one surface of the support base 312 and configured to mount the elastic connecting member 320, and a fixing member 316 formed to fix the elastic connecting member 310 on the protruding mount portion 314.

Referring back to FIG. 2A and FIG. 4, the plate-shaped base 324 of the elastic connecting member 320 is supported on the protruding mount portion 314, so that a deformation gap 222 may be formed between the plate-shaped basis 324 of the elastic connecting member 320 and the support base 312 of the support member 310.

That is, in an embodiment of the present disclosure, the connector 300 may include a deformation gap 222 formed between the support base 312 and the elastic connecting member 320, so that when the first printed circuit board 10 and/or the second printed circuit board 12 are mounted on the substrate mounting surface 210, the first contact portion 326 and the second contact portion 328 are respectively pressed by the lower surfaces of the printed circuit boards 10 and 12, and the elastic connecting members 320 are elastically deformable (see FIG. 2B).

Further, in an embodiment of the present invention, the fixing member 316 may include a fixing member 316 formed on the protruding mount portion 314. The elastic connecting member 320 may include a through hole into which the fixing member 316 is inserted.

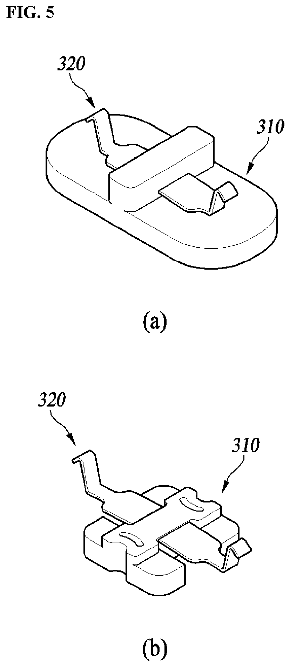

FIG. 5 is a diagram illustrating examples of a connector that is integrally formed through an insert injection method according to an embodiment of the present disclosure.

Referring to FIG. 5, the connector 300 according to the present disclosure may be manufactured in an insert injection manner. That is, the elastic connecting member 320 and the support member 310 may be integrally formed through insert injection. However, the present disclosure is not limited thereto, and the elastic connecting member 320 and the support member 310 may be separately manufactured and integrated through a separate assembly process.

In one illustrated embodiment of the invention, the connector 300 is illustrated as having a structure and size for transmitting and receiving high frequency signals. However, the present invention is not limited thereto. The connector 300 may be used in variations to have a structure sized to carry signals other than high frequency signals, for example, a power source or an analog or digital low frequency signal.

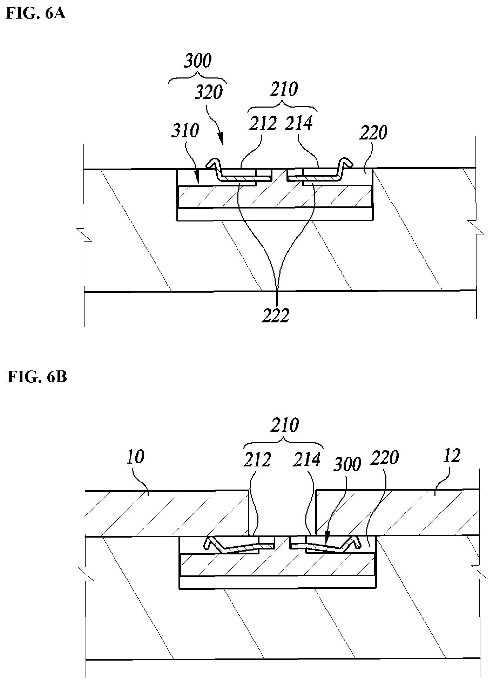

FIG. 6A is a cross-sectional view of a portion of a communication device according to another embodiment of the present disclosure, showing when printed circuit boards on which a printed board connected with a connector has the same height are not disposed.

FIG. 6B is a cross-sectional view of a portion of a communication device according to another embodiment of the present disclosure, showing when printed circuit boards on which a printed board connected with a connector has the same height are disposed.

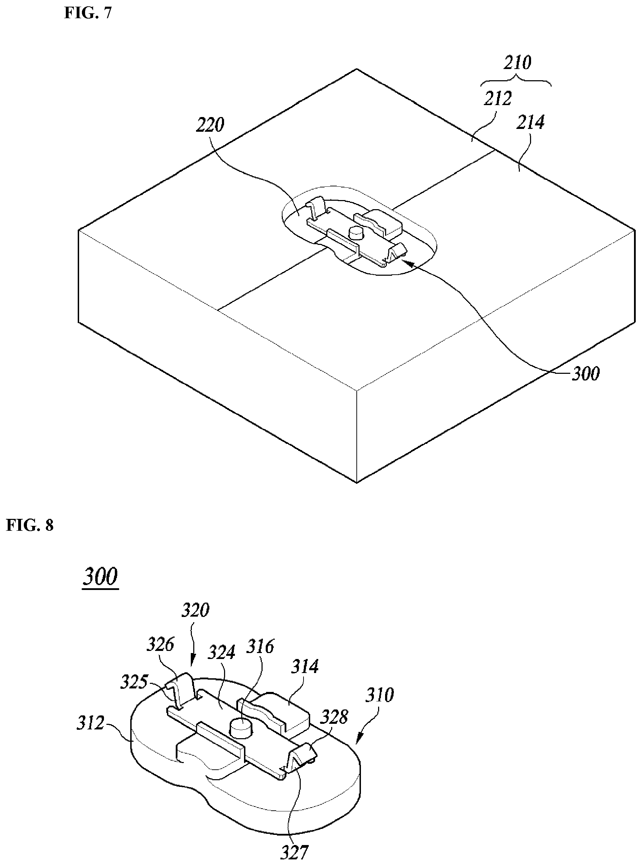

FIG. 7 is a perspective view of a portion of a communication device according to another embodiment of the present disclosure.

FIG. 8 is a perspective view separately illustrating only a connector of a communication device according to another embodiment of the present disclosure.

A communication device according to another embodiment of the present disclosure will be described with reference to FIGS. 6 to 8. Description of overlapping parts with one embodiment of the present disclosure will be omitted, but it should be noted that features of one embodiment according to the present disclosure may be applied to other embodiments in the same or similar manner to the extent that they are not disposed in other embodiments of the present disclosure.

According to another embodiment of the present disclosure, the first mounting surface 212 and the second mounting surface 214 may be planar so as to have the same or similar height, i.e., so as not to have a step. The first printed circuit board 10 and the second printed circuit board 12 may be the same or similar in thickness. The upper side of the first printed circuit board 10 and the upper side of the second printed circuit board 12 may thus be arranged on the same plane or a similar plane.

When the first printed circuit board 10 and the second printed circuit board 12 are formed to have the same or similar thickness, the substrate mounting surface 210 may be formed to have a planar shape without a step. In this case, lengths (or vertical heights) of the first side wall 325 and the second side wall 327 of the elastic connecting member 320 may be the same or similar.

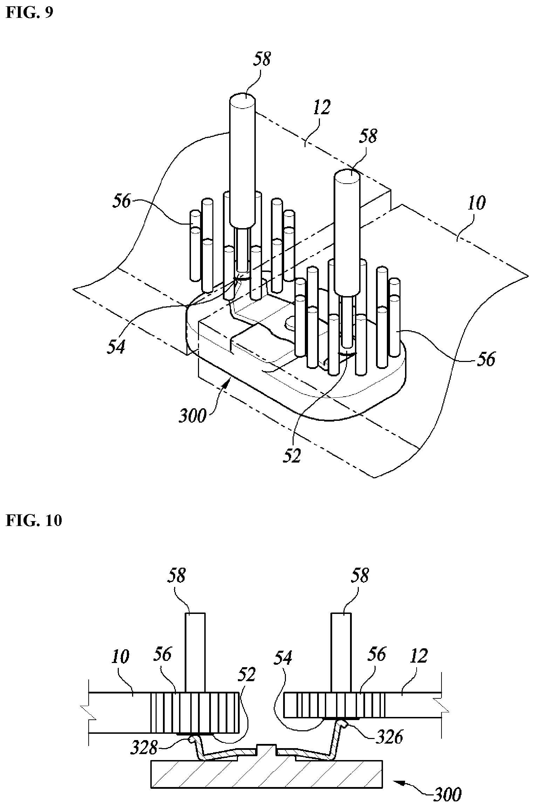

FIG. 9 is a perspective view of a portion of a device configured for simulating connector performance of a communication device according to the present disclosure.

FIG. 10 is a perspective cross-sectional view of FIG. 9.

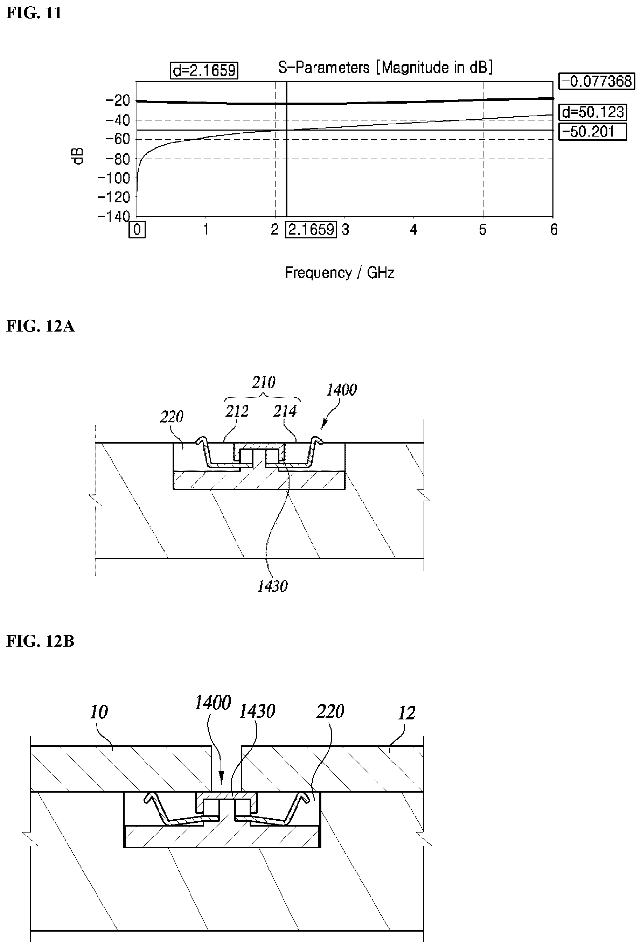

FIG. 11 is a simulation result for the device configuration of FIGS. 9 and 10.

FIG. 10 shows a communication device according to an embodiment of the present disclosure, that is, the printed circuit boards 10 and 12 have different thicknesses, and the side walls 325 and 327 have different heights. However, it should be noted that the effects of the present disclosure described below may not only be achieved according to an embodiment, but may also be achieved in other embodiments of the present disclosure. That is, the thicknesses of the printed circuit board 10 and 12 may be the same or similar, and the heights of the side walls 325 and 327 may be the same, or similar.

Referring to FIG. 9 to FIG. 11, a virtual digital board and a virtual amplifier board structure are used to simulate the connector performance of the communication device according to the present invention.

The virtual digital board (the second printed circuit board 12) and the virtual amplifier board (the first printed circuit board 10) each include a first electrode 54 and a second electrode 52 that are in contact with and electrically connected to the first contact portion 326 and the second contact portion 328 of the elastic connecting member 320.

For the purpose of simulation, a plurality of via holes 56 were illustrated surrounding the periphery of the first electrode 54 and the second electrode 52, and a port 58 for signal transmission was installed in each of the first electrode 52 and the second electrode 54, respectively.

As with the simulation result shown in FIG. 11, for this configuration, the return loss of the connector 300 was found to be 20 dB. In addition, it may be seen that when the interval of the structure of the connector 300 is 10 mm (1 cm), and when the frequency of the high-frequency signal is 2.16 GHz, the isolation value is 50 dB. It may also be seen that the insertion loss is at most 0.1 dB.

It may be seen that the isolation degree varies according to the interval of the connector structure, and the connector structure interval according to the connector structure and the high-frequency signal type may be determined and optimized by referring to the simulation result.

According to the present invention, the heat management of the first printed circuit board 10 and the second printed circuit board 12, which are a kind of heat source, in particular, the radiating performance through direct heat conduction, may be an important factor in determining the performance of the entire device.

Thus, in one embodiment of the invention the first printed circuit board 10 and the second printed circuit board 12 are arranged in direct contact with the instrument box 20, for example the outer housing.

However, the region in which the first printed circuit board 10 and the second printed circuit board 12 are spaced apart from each other has a relatively small influence on the radiating fin performance of the printed circuit boards due to direct conduction.

The present invention forms a connecting structure for connecting both substrates in a spaced-apart arrangement region between these printed circuit boards. Since the instrument box 20, for example, the outer housing, is itself a metallic shielding material, the connector according to an embodiment of the present disclosure may maintain an effective shielding state with respect to the outside inside the connection groove 220. That is, even if the connector is not covered with a separate RF shielding member, the connector of the communication device according to the present invention may have a sufficient shielding effect (degree of isolation) as revealed in the simulation results above.

Furthermore, the communication device having a compact size while having excellent radiating fin performance may be provided because as large an area as possible of the printed circuit boards may have a structure in direct surface contact with the instrument box 20.

FIG. 12A is a cross-sectional view of a portion of a communication device according to another embodiment of the present disclosure, showing when printed circuit boards are not disposed.

FIG. 12B is a cross-sectional view of a portion of a communication device according to another embodiment of the present disclosure, showing when printed circuit boards are disposed.

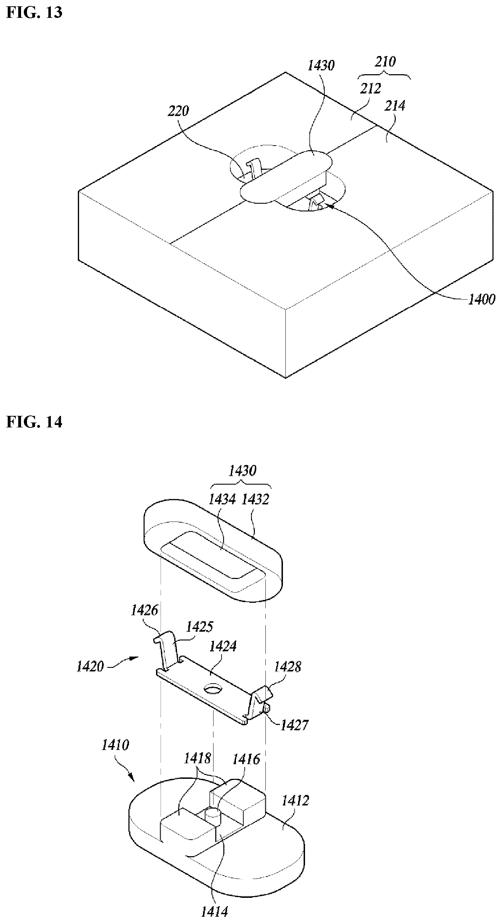

FIG. 13 is a perspective view of a portion of a communication device according to another embodiment of the present disclosure.

FIG. 14 is an exploded perspective view of a connector according to another embodiment of the present disclosure.

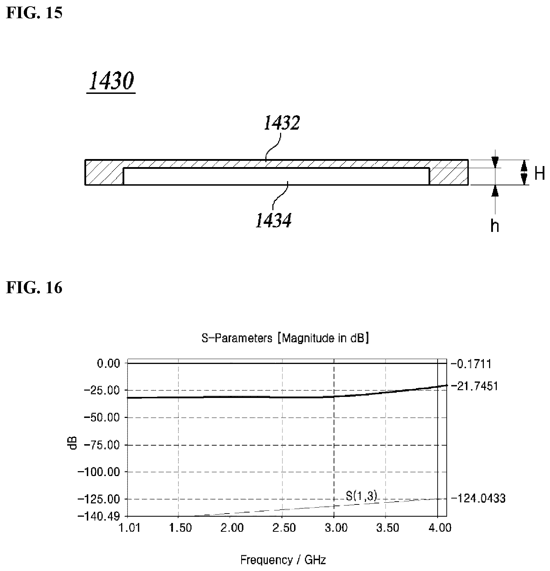

FIG. 15 is a cross-sectional view of a gasket according to another embodiment of the present disclosure.

Before a communication device according to another embodiment of the present disclosure is described, overlapping parts with the communication devices according to the embodiments of the present disclosure described above will be omitted, but it should be noted that the contents (for example, the support base, the protruding mount portion, the fixing member, the plate-shaped base, the first side wall, the first contact portion, the second side wall, the second contact portion, and the like) of the communication device according to one embodiment and another embodiment of the disclosure may be applied equally or similarly to the communication device of another embodiment of the invention to the extent that they are not arranged.

Referring to FIGS. 12-15, a communication device according to another embodiment of the present disclosure may include a connector 1400 and a gasket 1430.

The connector 1400 may include a support member 1410 and an elastic connecting member 1420.

The support member 1410 may include a support base 1412, a protruding mount portion1414, a fixing member 1416, and a protruding insertion portion 1418.

The elastic connecting member 1420 may include a plate-shaped base 1424, a first side wall 1425, a first contact portion 1426, a second side wall 1427, and a second contact portion 1428.

The gasket 1430 may include a body 1432 and an insertion groove 1434.

The support member 1410 according to another embodiment of the present disclosure may further include a protruding insertion portion 1418 to be coupled to the gasket 1430. The protruding insertion portions 1418 may be formed on both sides of the protruding mount portion 1414. The protruding insertion portion 1418 is formed to protrude from the support base 1412. When the protruding insertion portion 1418 is inserted into the insertion groove 1434 of the gasket 1430, the support member 1410 and the gasket 1330 may be coupled to each other. The elastic connecting member 1420 is disposed between the support member 1410 and the gasket 1430. The protruding insertion portion 1418 may be formed in a shape corresponding to the shape of the insertion groove 1434 of the gasket 1430, and the height of the protruding insertion portion 1418 may be the same as or similar to the height of the insertion groove 1434, so that the support member 1410 and the gasket 1330 are firmly coupled. The protruding insertion portion 1418 may be formed to have a height higher than that of the protruding mounting portion 1414.

Hereinafter, the gasket 1430 will be described as being separate from the connector 1400, but it should be noted that the gasket 1430 and the connector 1400 do not necessarily have to be separate configurations, and the gasket 1430 may be understood as one configuration included in the connector 1400.

The gasket 1430 is disposed to cover at least a part of the connector 1400 to improve a shielding effect of the connector 1400. The gasket 1430 may be disposed to cover at least a portion of the elastic connecting member 1420 of the connector 1400. The gasket 1430 may be disposed to cover at least a portion of the plate-shaped base 1424 of the elastic connecting member 1420. As shown in FIGS. 13 and 14, the gasket 1430 may be disposed to intersect the connector 1400. Thus, the shielding effect of the connector 1400 may be improved while a plurality of printed circuit boards are electrically connected. The gasket 1430 may be disposed to be orthogonal to the connector 1400.

The gasket 1430 may be coupled with the connector 1400. The gasket 1430 may be configured to allow insertion of at least a portion of the connector 1400, the protruding insertion portion 1418 of the support member 1410. The gasket 1430 may include a body 1332 and an insertion groove 1434. The protruding insertion portion 1418 of the support member 1410 may be inserted into the insertion groove 1434. As described above, the insertion groove 1434 and the protruding insertion portion 1418 may be formed in a shape corresponding to each other, so that the gasket 1430 and the connector 1400 may be firmly coupled. The height of the insertion groove 1434 may be the same as or similar to the height of the protruding insertion portion 1418.

Referring to FIG. 15, the height h of the insertion groove 1434 may be equal to or greater than half of the total height H of the gasket 1430. For example, when the total height H of the gasket 1430 is 1.2 mm, the height of the insertion groove 1434 may be 0.7 mm. Therefore, the gasket 1430 and the connector 1400 are firmly coupled without increasing the package size, and the shielding effect of the connector 1400 may also be improved.

The gasket 1430 may be made of aluminum to improve the shielding effect of the connector 1400, but the material of the gasket 1430 is not limited thereto, and various materials for improving the shielding effect of the connector 1400 may be applied.

FIG. 16 is a simulation result for another embodiment of the present disclosure including a gasket 1430.

Referring to FIG. 16, the return loss of the connector 1400 of the communication device including the gasket 1430 is found to be 21.7451 dB when the frequency of the high frequency signal is 4 GHz. In addition, when the frequency of the high-frequency signal is 4 GHz with respect to S (1,3), the isolation value is 124.0433 dB, and it may be confirmed that the shielding effect is significantly improved compared to the case where the gasket 1430 is not included (see FIG. 11). In addition, it may be seen that the insertion loss is 0.1711 dB when the frequency of the high frequency signal is 4 GHz.

As described above, in the communication device including the gasket 1430 according to the present disclosure, the gaskets 1430 are disposed so as to cover at least a part of the connector 1400, and thus there is an effect that the shielding effect for the connector 1400 is significantly enhanced.

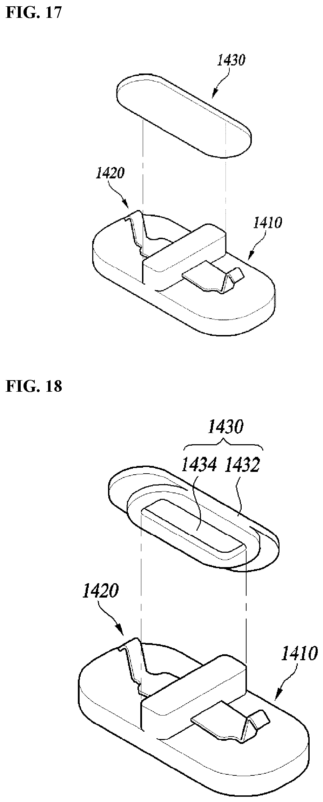

FIG. 17 is an exploded perspective view of a connector including a gasket without an insertion groove according to another embodiment of the present disclosure.

Referring to FIG. 17, in the gasket 1430 according to another embodiment of the present disclosure, the above-described insertion groove 1434 may not be formed, and both an upper surface and a lower surface may be formed to be flat. When the insertion groove 1434 is not formed in the gasket 1430, the gasket 1430 may be mounted on the support member 1410, for example, on the protruding mount portion 1414 (see FIG. 14) or the protruding insertion portion 1418 (see FIG. 4) to cover the connector 1400. When the gasket 1430 does not include the insertion groove 1434 and is formed in a flat shape, the shielding effect of the connector 1400 is improved, and the structure is simple and the manufacturing cost is reduced.

FIG. 18 is an exploded perspective view of a connector including a slotted gasket according to another embodiment of the present disclosure.

Referring to FIG. 18, an insertion groove 1434 may be formed in the gasket 1430 according to another embodiment of the present disclosure as described above. For example, an insertion groove 1434 may be formed on a lower surface of the gasket 1430. As illustrated in FIG. 18, one surface (e.g., a lower surface) of the gasket 1430 may be formed to have a step, and the insertion groove 1434 may be formed on the one surface formed to have a step. When a part of the support member 1410 (e.g., the protruding insertion portion 1418 (see FIG. 14)) is inserted into the insertion groove 1434, the connector 1400 and the gasket 1430 may be coupled to each other. When the insertion groove 1434 is formed in the gasket 1430 and the connector 1400 and the gasket 1430 are coupled by using the insertion groove, return loss may be improved as described below.

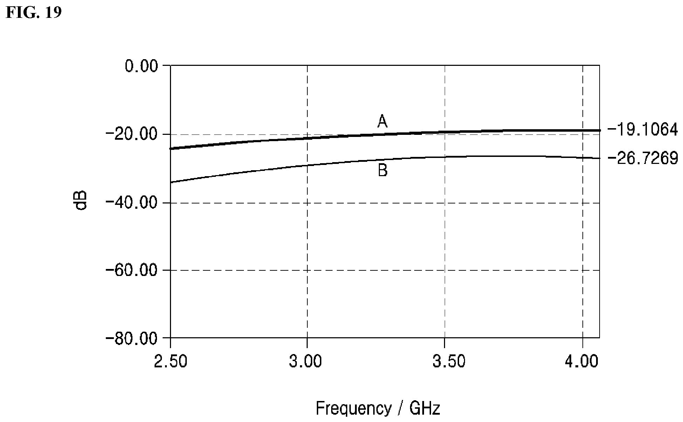

FIG. 19 is a simulation result for the connector shown in FIGS. 17 and 18.

Referring to FIG. 19, it is shown that the return loss A of the connector 1400 covered with the flat-shaped gasket 1430 in which the insertion groove 1434 described with reference to FIG. 17 is not formed is 19.1064 dB when the frequency of the high frequency signal is 4 GHz, and the return loss B of the connector 1400 covered with the stepped gasket 1430 including the insertion groove 1434 described with reference to FIGS. 18A and 18B is 26.7269 dB when the frequencies of the high frequency signals are 4 GHz. That is, it may be seen that the insertion groove 1434 is formed in the gasket 1430, and when the connector 1400 and the gasket 1430 are coupled by using this, the return loss is improved. However, even when the gasket 1430 having a flat shape illustrated in FIG. 17 is used, a relatively excellent return loss may be expected while improving the shielding effect of the connector 1400, and the structure is simple and the manufacturing cost is reduced, so that the gasket 1430 having an appropriate structure may be selected and applied as necessary.

The foregoing descriptions are merely illustrative of the technical concept of the present embodiment, and various modifications and variations may be made by those skilled in the art without departing from the essential characteristics of the present embodiment. Therefore, the present embodiments are not intended to limit the technical concept of the present embodiments, but are intended to be illustrative, and the scope of the technical concept of this embodiment is not limited by these embodiments. The protection scope of the present embodiment is to be construed according to the following claims, and all technical ideas within the scope equivalent thereto are construed as being included in the scope of rights of the present embodiment.

### [Description of Signs]

1400 Connector
1410 Support member
1420 Elastic connecting member
1430 Gasket

### [CROSS-REFERENCE TO RELATED APPLICATIOIN]

This patent application claims priority to Korean Patent Application No. 10-2022-0155854, filed on November 18, 2022, which is incorporated herein by reference in its entirety.

## Claims

1. A communication device, comprising:
an instrument box including a substrate mounting surface and a connection groove formed in the substrate mounting surface;
a plurality of printed circuit boards disposed on the substrate mounting surface;
a connector disposed in the connection groove and electrically connecting the plurality of printed circuit boards; and
a gasket disposed to cover at least a part of the connector.

2. The communication device of claim 1,
wherein the gasket is configured such that at least a portion of the connector may be inserted.

3. The communication device of claim 2,
wherein the gasket comprises:
an insertion groove into which a body portion and at least a part of the connector are inserted.

4. The communication device of claim 3,
wherein the connector comprises:
a support member disposed in the connection groove and in contact with at least a part of the instrument box; and
a conductive elastic connecting member disposed between the support member and the plurality of printed circuit boards, and
the gasket is disposed so that at least a part of the support member is inserted into the insertion groove.

5. The communication device of claim 4,
wherein the support member comprises:
a support base;
a protruding mount portion protruding from one side of the support base and configured to allow the elastic connecting member to be mounted thereon;
protruding insertion portions formed on both sides of the protruding mount portion, and
the gasket is disposed so that the protruding insertion portion is inserted into the insertion groove.

6. The communication device of claim 5,
wherein the connector further comprises:
a deformation gap formed between the support base and the elastic connecting member.

7. The communication device of claim **1,**
wherein the gasket is disposed to intersect the connector.

8. The communication device of claim **1,**
wherein the gasket is made of aluminum.

9. The communication device of claim 3,
wherein a height of the insertion groove is greater than or equal to a half of a height of the body portion.

10. The communication device of claim 5,
wherein a height of the protruding insertion portion is the same as the height of the insertion groove.

11. The communication device of claim 4,
wherein the elastic connecting member comprises:
a plate-shaped base, a first side wall formed on one side of the plate-shaped base; a first contact portion formed on one side of the first side wall; a second side wall formed on the other side of the plate-shaped base; and a second contact portion formed on one side of the second side wall, and
the gasket is disposed so as to cover at least a part of the plate-shaped base.

12. The communication device of claim 4,
wherein the support member is made of polycarbonate, Lusep, or Teflon.

13. The communication device of claim 1,
wherein the instrument box comprises a plurality of radiating fins formed at least in a part thereof.

14. The communication device of claim 1,
wherein the connector comprises:
a support member disposed in the connection groove and contacting at least a part of the instrument box; and
a conductive elastic connecting member disposed between the support member and the plurality of printed circuit boards,
wherein the support member and the elastic connecting member are integrally formed.

15. The communication device of claim 1,
wherein an upper surface and a lower surface of the gasket are formed in a flat shape.

16. The communication device of claim 1,
wherein one surface of the gasket is formed to have a step.

17. An RF connector, comprising:
an elastic connecting member, at least a part of which is elastically deformable, configured to electrically connect the printed circuit boards;
a support member for supporting the elastic connecting member; and
a gasket disposed to cover at least a part of the elastic connecting member.

18. The RF connector of claim 17,
the support member comprises:
a support base;
a protruding mount portion protruding from one side of the support base and configured to allow the elastic connecting member to be mounted thereon; and
protruding insertion portions formed on both sides of the protruding mount portion, and
the gasket is disposed so that the protruding insertion portion is inserted into an insertion groove.

19. The RF connector of claim 17,
wherein the gasket is disposed to intersect with the elastic connecting member.

20. The RF connectorof claim 17,
wherein the elastic connecting member comprises:
a plate-shaped base, a first side wall formed on one side of the plate-shaped base; a first contact portion formed on one side of the first side wall; a second side wall formed on the other side of the plate-shaped base; and a second contact portion formed on one side of the second side wall, and
the gasket is disposed so as to cover at least a part of the plate-shaped base.
